# EUROPÄISCHE PATENTSCHRIFT

(11) **EP 1 368 695 B1**
(45) Veröffentlichungstag und Bekanntmachung des Hinweises auf die Patenterteilung: **07.12.2011**
(21) Anmeldenummer: 02719655.9
(22) Anmeldetag: 01.03.2002
(51) Int. Cl.: G02F 1/1333, G02F 1/1343, G02F 1/03, G08B 13/19, G08B 13/194, G08B 17/107, H04N 5/225, G03B 9/02

(54) **STREULICHT-RAUCHMELDER MIT OPTISCHER BLENDE**
STRAY LIGHT SMOKE ALARM WITH OPTICAL DIAPHRAGM
DETECTEUR DE FUMEE A LUMIERE DIFFUSEE AVEC DIAPHRAGME OPTIQUE

(30) Priorität: 02.03.2001 DE 10110231
(43) Veröffentlichungstag der Anmeldung: 10.12.2003
(73) Patentinhaber: ROBERT BOSCH GMBH, 70442 Stuttgart (DE)
(72) Erfinder: PFEFFERSEDER, Anton, 82054 Sauerlach-Arget (DE); SIBER, Bernd, 85625 Glonn (DE); HENSEL, Andreas, 85658 Egmating (DE); ROTTMANN, Frank, 81667 München (DE); OPPELT, Ulrich, 85604 Zorneding (DE)
(86) Internationale Anmeldenummer: PCT/DE2002/000745
(87) Internationale Veröffentlichungsnummer: WO 2002/071136

(56) Entgegenhaltungen:
- EP-A- 0 029 568
- EP-A- 0 432 680
- EP-A2- 0 729 024
- WO-A-00/62267
- WO-A-00/72282
- WO-A-98/05990
- DE-A- 2 057 018
- FR-A- 2 562 363
- FR-A- 2 614 426
- US-A- 4 333 720
- US-A- 5 302 837
- US-A- 5 451 931
- US-A- 5 641 963

## Beschreibung

Die Erfindung bezieht sich auf einen Streulicht-Rauchmelder mit einer optischen Blende und einem Lichtempfänger als Meßaufnehmer, nach der Gattung des unabhängigen Patentanspruchs.

Aus der US 5,302,837 ist ein photoelektrischer Rauchdetektor mit einem ausgedehnten Sichtfeld bekannt, wobei vor einer Fotodiode eine Linse und eine Feldbegrenzungseinrichtung angeordnet ist.

Die EP 0 729 024 A2 offenbart eine Vorrichtung zur Erkennung von Partikeln, wobei die Vorrichtung eine Mehrzahl an optischen Blenden aufweist, die vor einem Lichtempfangselement angeordnet sind.

Ferner ist aus der US 5,451,931 ein optischer Rauchdetektor mit einer Fotodiode und einer Blende bekannt, der alle Merkmale des Oberbegriffs von Anspruch 1 aufweist.

Es ist bereits bekannt, mechanische Blenden vor einem Bildaufnehmer als Meßaufnehmer zu verwenden, mit der die Intensität des einfallenden Lichtes auf den Bildaufnehmer eingestellt wird. Es sind beispielsweise Spaltblenden, bei denen das Licht durch einen Spalt mit variabler Spaltenbreite geleitet wird, und Lochblenden, bei denen durch eine mechanische Iris ein Loch mit variablem Durchmesser erzeugt wird, bekannt. Derartige mechanische Blenden verlangen mechanische Aktoren, beispielsweise Schrittmotoren und entsprechende mechanische bewegliche Teile.

### Vorteile der Erfindung

Die optische Blende des erfindungsgemäßen Streulicht-Rauchmelders hat demgegenüber den Vorteil, dass eine optische Blende ohne mechanische oder elektromechanische Elemente realisiert wird. Dies vereinfacht den Aufbau eines Bildaufnahmesystems mit Blenden erheblich. Es wird hier vorteilhafter Weise nur eine Veränderung an den optischen Eigenschaften eines in der optischen Blende befindlichen Materials vorgenommen. Dies kann elektrisch, magnetisch oder thermisch vorgenommen werden. Darüber hinaus gestaltet es die Herstellungskosten erheblich günstiger, auf mechanische Teile zu verzichten. Es ermöglicht ferner eine kompakte Bauform.

Wird eine optische Blende aus einer Mehrzahl von solchen Anordnungen mit einem in seinen optischen Eigenschaften veränderlichen Material hergestellt, dann sind verschiedene Geometrien möglich. Damit eröffnen sich dann die unterschiedlichsten Anwendungsmöglichkeiten. Insbesondere ist es dabei möglich, einen Spalt mit variabler Spaltenbreite aufzubauen oder eine Lochblende mit variablem Öffnungsdurchmesser. Auch die Struktur der optischen Blende läßt sich damit nahezu beliebig gestalten und eröffnet damit eine Vielzahl von Anwendungsmöglichkeiten.

Durch die in den abhängigen Ansprüchen aufgeführten Maßnahmen und Weiterbildungen sind vorteilhafte Verbesserungen der im unabhängigen Patentanspruch angegebenen optischen Blende möglich.

Besonders vorteilhaft ist, dass das in seinen optischen Eigenschaften veränderliche Material als ein Flüssigkristall ausgebildet ist. Hier liegt dann ein elektrooptisch aktives Material vor. Flüssigkristall ist ein von Digitalanzeigen bekanntes Material, wobei der Flüssigkristall auch als nematische Flüssigkeit bezeichnet wird und aus fadenförmigen Molekülketten besteht, die, obwohl der Flüssigkristall eine Flüssigkeit ist, zueinander ausgerichtet sind, so dass der Flüssigkristall anisotrope optische Eigenschaften aufweist.

Schickt man Licht, das von einem Polarisationsfilter polarisiert wurde, durch eine dünne Flüssigkristallschicht, wobei die Ausbreitungsrichtung des Lichtes senkrecht zur optischen Achse des Flüssigkristalls verläuft, dann tritt Doppelbrechung auf und die Polarisationsrichtung des Lichts ändert sich. Bei geeigneter Dicke der Flüssigkristallschicht dreht sich die Polarisationsebene genau um 90°, so dass das Licht das zweite im Vergleich zum Polarisator um 90° gedrehte Polarisationsfilter (Analysator) passieren kann. Wird nun ein elektrisches Feld in Ausbreitungsrichtung des Lichtes angelegt, dann dreht sich die optische Achse des Flüssigkristalls parallel zu dieser Ausbreitungsrichtung. Dann tritt keine Doppelbrechung mehr auf. Die Polarisationsebene des Lichtes wird nicht mehr gedreht und das Licht kann deshalb den Analysator nicht mehr durchdringen.

Von Flüssigkristallzellen mit verbessertem Kontrastverhältnis gibt es Weiterentwicklungen, wie die sogenannte Twisted-Nematic-Flüssigkristall-Zellen, wobei die dünne Flüssigkristallschicht aus Molekülen, die eine schraubenförmige Verdrehung aufweisen, die wiederum zu einer 90°-Verdrehung der Polarisationsebene des Lichtes führen, besteht. Weitere Alternativen sind Super-Twisted-Nematic-Zellen. Hier wird das Kontrastverhältniss durch eine dickere Flüssigkristallschicht, die zu einer Verdrehung der Polarisationsebene um 270° führt, verbessert. Eine weitere Entwicklung sind Double-Super-Twisted-Nematic-Zellen. Dabei werden hintereinander geschaltete Super-Twisted-Nematic-Zellen verwendet, wobei eine davon aktiv ist, d.h. elektrisch angesteuert wird und die zweite passiv dazu dient, die Polarisationsebene des Lichtes wieder in die ursprüngliche Richtung zurückzudrehen, um Farbverfälschungen, die durch Dispersion des Lichtes entstehen, wieder rückgängig zu machen. Es gibt auch Film-Super-Twisted-Nematic-Zellen. Hier sorgen anstatt einer zweiten Flüssigkristallschicht spezielle Kompensationsfolien für die nötige Farbreinheit.

Darüber hinaus ist es von Vorteil, dass die Flüssigkristallzellen konzentrisch zueinander angeordnet sind, um eine künstliche Iris zu realisieren. Damit kann eine Lochblende mit variablem Durchmesser geschaffen werden. Alternativ ist es von Vorteil, dass durch mehrere Flüssigkristallzellen eine Matrix gestaltet werden kann, mit der dann beliebige Geometrien zur Bildaufnahme möglich sind.

Die optische Blende ist als optisches Schaltelement ausgebildet, wobei zwischen dem optischen Schaltelement und dem Bildaufnehmer als Meßaufnehmer eine Abbildungsoptik vorhanden ist, die das Licht auf den Bildaufnehmer abbildet. Unter Licht wird hier elektromagnetische Stahlung im allgemeinen verstanden. Dabei stellt jede Flüssigkristallzelle der optischen Blende einen eigenen optischen Schalter dar. Damit können dann Teile der Abbildungsoptik unterschiedlich mit empfangenem Licht beschaltet werden. Damit ist sowohl ein *optisches* Abtasten eines Raumes als auch das Verfolgen eines bewegten Objekts möglich. Darüber hinaus kann durch das Abtasten eines Raumes festgestellt werden, ob ein Objekt oder eine Erscheinung statisch ist oder sich bewegt. Weiterhin kann man ermitteln, an welcher Stelle im Raum sich das Objekt befindet.

Dabei ist es insbesondere von Vorteil, dass die Abbildungsoptik Linsen mit unterschiedlicher Vergrößerung aufweist, so dass durch das Schalten des optischen Schaltelements für den Bildaufnehmer unterschiedliche Vergrößerungen möglich sind. Wird ein interessantes Objekt für den Bildaufnehmer gefunden, dann kann durch die entsprechende Beschaltung der optischen Blende eine Linse mit größerer Vergrößerung ausgewählt werden, um dieses Objekt besser zu untersuchen. Als Abbildungsoptik können dabei vorteilhafterweise ein Linsensystem, beispielsweise aus einem Mikrolinsen-Array oder planare Fresnel-Linsen oder holographische Linsen verwendet werden. Holographische Linsen zeichnen sich dadurch aus, dass sie eine eingeschriebene Gitterstruktur aufweisen, mit der dann die Linsenwirkung ermöglicht ist. Solche holographische Linsen werden zumeist lithographisch mit Elektronenstrahlen hergestellt. Dabei ist auch eine wellenlängenabhängige Filterwirkung möglich.

Erfindungsgemäß umfasst ein Streulicht-Rauchmelder die optische Blende. Dabei kann dann der Streulicht-Rauchmelder Streulicht aus verschiedenen Richtungen detektieren. Von einer Lichtquelle wird dabei Licht in einen bestimmten Raumbereich abgestrahlt. Befindet sich in diesem Raumbereich Rauch, dann wird das abgestrahlte Licht an ihm gestreut. Vor dem Lichtempfänger des Streulicht-Rauchmelders befindet sich ein Feld von Abbildungsoptiken, das das Streulicht, das von verschiedenen Raumbereichen entlang des von der Lichtquelle ausgehenden Lichtstrahles gestreut wird, auf den Empfänger abbildet. Durch ein sequentielles Freischalten der einzelnen Abbildungsoptiken kann das von den einzelnen Raumbereichen gestreute Licht mit nur einem Lichtempfänger gemessen werden. Ein weiterer Vorteil besteht darin, dass es die zusätzlichen Streulichtsignale ermöglichen, eine zuverlässigere Alarmentscheidung zu treffen: Bei einem Brand kann davon ausgegangen werden, dass der Rauch relativ gleichmäßig vor dem Brandmelder verteilt ist, so dass von jedem Raumbereich entlang des ausgesendeten Lichtstrahls ein Streulichtsignal empfangen wird. Wenn nur von einem der Raumbereiche ein großes Streulichtsignal empfangen wird, dann deutet das auf eine Störgröße hin. Beispiel dafür sind einzelne Insekten, die sich in einem der verschiedenen Streuvolumen befinden oder ein Spinnennetz, das an einem Streuvolumen gebaut wird.

### Zeichnung

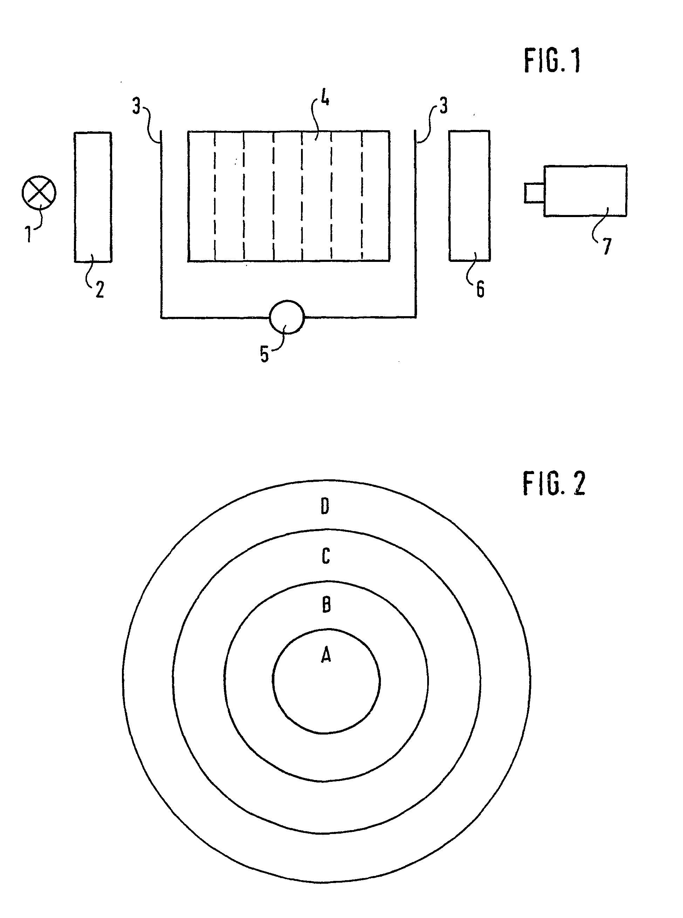

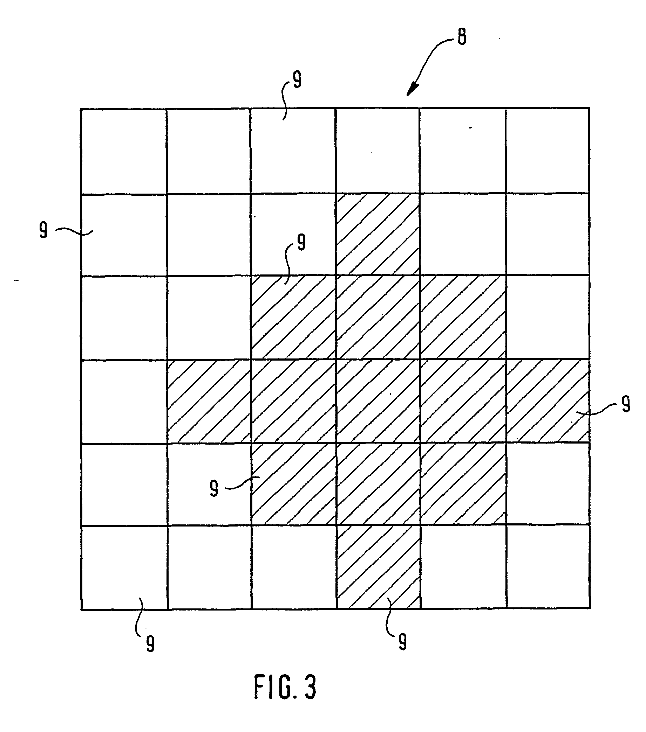

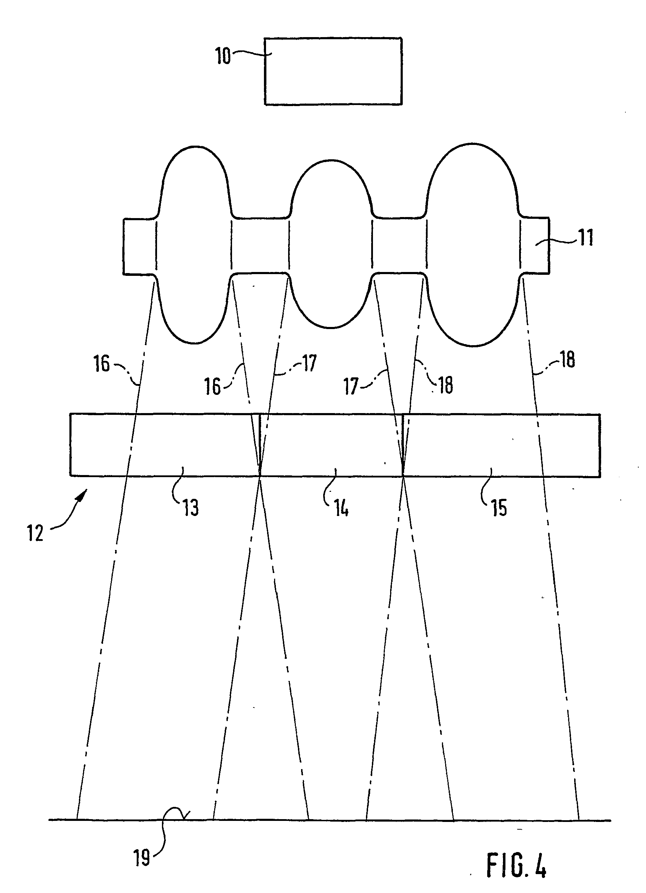

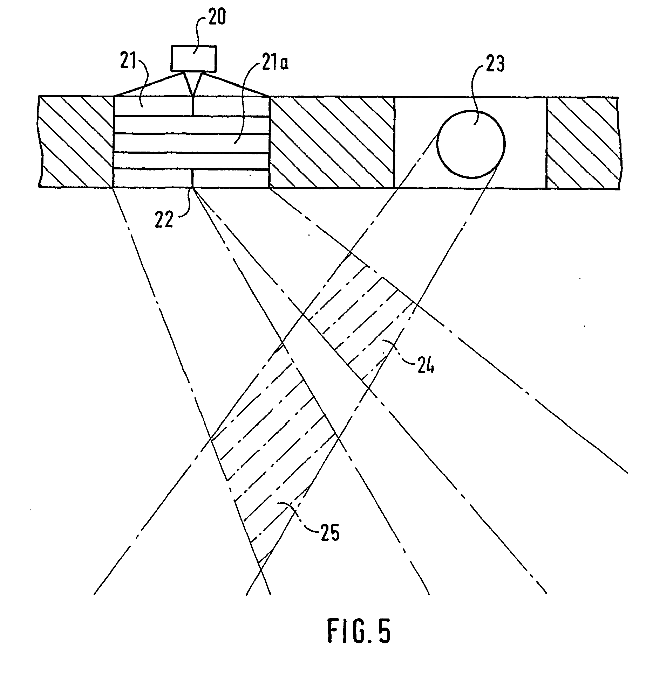

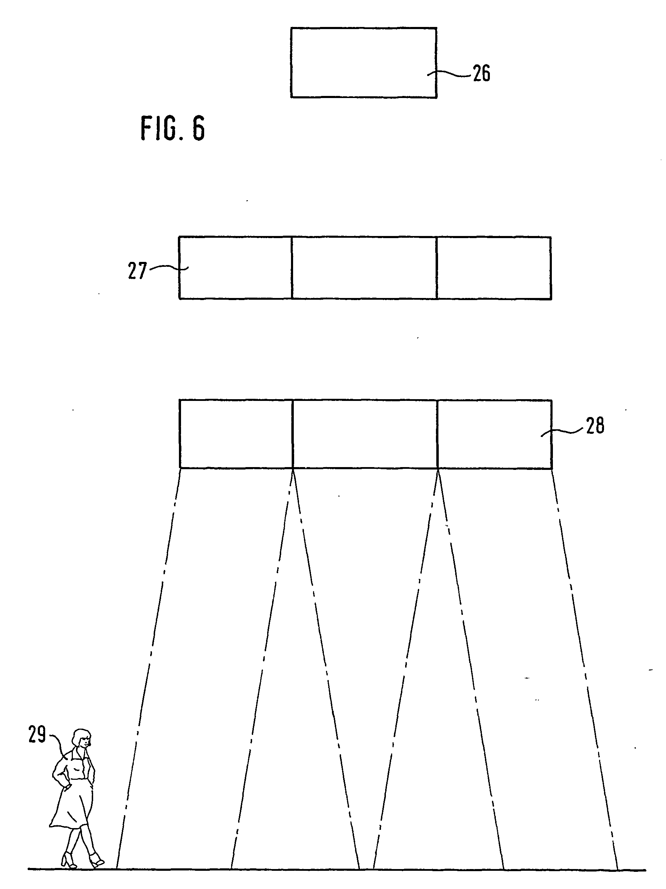

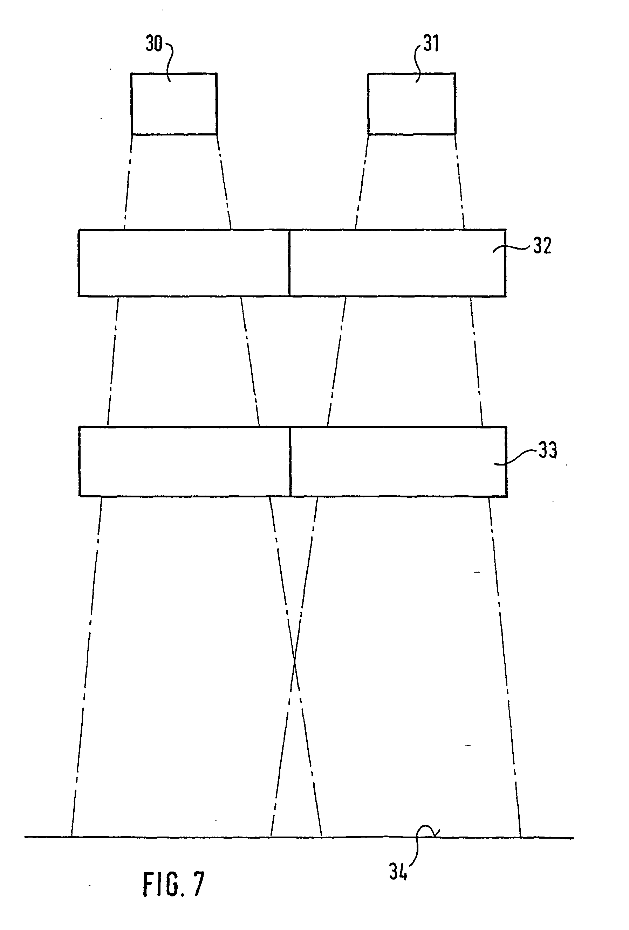

Ausführungsbeispiele der Erfindung sind in der Zeichnung dargestellt und werden in der nachfolgenden Beschreibung näher erläutert. Figur 1 zeigt schematisch eine optische Blende des erfindungsgemäßen Streulicht - Rauchmelders, Figur 2 eine künstliche Iris aus der optischen Blende, Figur 3 ein Array von optischen Blenden, Figur 4 die optische Blende mit einem Bildaufnehmer und einer Abbildungsoptik, Figur 5 den erfindungsgemäßen Streulicht-Rauchmelder mit der optischen Blende. Figur 6 zeigt die optische Blende zum Einsatz einer Personenerkennung und Figur 7 die optische Blende in einem kombinierten Video-Infrarotsensor, wobei die Figuren 6 und 7 kein Ausführungsbeispiel der

### Beschreibung Erfindung zeigen.

Der Begriff Meßaufnehmer beinhaltet als Oberbegriff einen Bildaufnehmer, ggf. zusammen mit einer Bildanalyseeinheit als "Videosensor", als auch Einzelsensoren wie Photoempfänger, Infrarotsensoren als auch Kombinationen der verschiedenen Sensoren und Bildaufnehmer

Figur 1 zeigt schematisch eine optische Blende des erfindungsgemäßen Streulicht - Rauchmelders, wobei hier eine Flüssigkristallzelle angegeben ist. D.h. hier wird der Flüssigkristall als elektrooptisch aktives Material verwendet. Es ist möglich, dass mehr als eine Flüssigkristallzelle in der optischen Blende kombiniert sind und so beispielsweise ein differentielles Abtasten eines Raums zu ermöglichen. Dies ermöglicht nahezu beliebige Geometrien der optischen Blende.

Eine Lichtquelle 1 strahlt Licht auf einen Polarisator 2, der das Licht in der Schwingungsebene dreht, so dass das dann gedrehte Licht auf ein elektrooptisch aktives Material 4, hier ein Flüssigkristall, fällt. Der Flüssigkristall zeigt eine Doppelbrechung, so dass es die Polarisationsrichtung des Lichtes geändert wird. Bei einer geeigneten Dicke der Flüssigkristallschicht dreht sich die Polarisationsebene um genau 90°, so dass das Licht einen Analysator 6 passieren kann. Der Analysator 6 und der Polarisator 2 haben zueinander senkrechte Polarisationsebenen. Wird nun ein elektrisches Feld in Ausbreitungsrichtung des Lichtes angelegt, dann dreht sich die optische Achse des Flüssigkristalls parallel zu dieser Ausbreitungsrichtung. Dann tritt keine Doppelbrechung mehr auf und die Polarisationsebene des Lichtes wird nicht mehr gedreht. Das Licht kann deshalb den Analysator 6 nicht mehr durchdringen, um zu einem Lichtempfänger 7 als Bildaufnehmer zu gelangen. Zum Anlegen des elektrischen Feldes dienen die Elektroden 3 und die Spannungsquelle 5.

Es ist bekannt, dass sich die optischen Eigenschaften von Materialien durch elektrische Felder beeinflussen lassen. Beim sogenannten Kerr-Effekt wird durch ein elektrisches Feld in einem isotrophen Stoff Doppelbrechung erzeugt. Dieser Effekt wird beispielsweise in einer Kerr-Zelle dazu verwendet, die Intensität einer Lichtquelle zu steuern. Eine Kerr-Zelle besteht aus gekreuzten Polarisationsfilter, wie eben dargestellt der Polarisator und der Analysator, zwischen denen sich der isotrophe Stoff befindet, der durch das elektrische Feld eines Kondensators beeinflußt wird. Der Kondensator wird durch die Elektroden gebildet.

Bei abgeschaltetem elektromagnetischem Feld kann das Licht nachdem es vom ersten Polarisationsfilter polarisiert wurde, nicht durch den Analysator zum Empfänger gelangen. Bei Einfluß des elektrischen Feldes wird der Stoff doppelbrechend, so dass die Schwingungsebene des durch den Polarisator linear polarisierten Lichts gedreht wird und durch den Analysator zum Empfänger gelangen kann. Dieser Effekt der elektrisch induzierten Doppelbrechung wird auch in der Pockels-Zelle angewandt, die genau so wie die Kerr-Zelle aufgebaut ist. Im Gegensatz zum Flüssigkristall wird hier jedoch durch Anlegen des elektrischen Feldes eine Doppelbrechung erzeugt. Die Kerr-Zelle als auch die Pockels-Zelle sind also Alternativen zum Flüssigkristall.

Figur 2 zeigt eine Irisblende, die aus mehreren konzentrischen Flüssigkristallzellen aufgebaut ist. Liegt an keiner der Flüssigkristallzellen A, B, C und D eine Spannung an, dann ist die Irisblende ganz geöffnet. Wird an die Flüssigkristallzelle D eine Spannung angelegt, dann absorbiert sie das Licht und die Blendenöffnung verkleinert sich. Um so mehr Flüssigkristallzellen C, B, A angesteuert werden, desto kleiner wird die Öffnung der Irisblende, bis es zum vollständigen Schließen kommt. Genauso läßt sich aus mehreren Flüssigkristallzellen ein Spalt mit variabler Spaltbreite aufbauen.

Figur 3 zeigt ein aus der optischen Blende angeordnetes Array 8. Jedes Rechteck hier repräsentiert eine Flüssigkristallzelle, die unabhängig voneinander jeweils ansteuerbar ist. Die schraffierten Zellen 9 sind nicht mit einem elektrischen Feld beaufschlagt, während die nichtschraffierten Zellen mit einem elektrischen Feld beaufschlagt sind. Damit sind die schraffierten Zellen völlig transparent für das Licht und das durch die schraffierten Zellen angegebene Blendenmuster ist geöffnet. Durch das Ansteuern der einzelnen Zellen sind also nahezu beliebig gestaltbare Blendenöffnungen möglich.

Figur 4 zeigt einen Bildaufnehmer 10, der sich hinter einer Abbildungsoptik 11 und der optischen Blende 12 des erfindungsgemäßen Streulicht-Rauchmelders befindet. Die optische Blende 12 weist drei Flüssigkristallzellen 13, 14, 15 auf, die unabhängig voneinander ansteuerbar sind. Die Abbildungsoptik 11 weist unterschiedliche Linsen auf, die durch das Öffnen und Schließen der Flüssigkristallzellen zur Strahlenbündelung auf den Bildaufnehmer 10 eingesetzt werden. Mit der optischen Blende 12 ist es möglich, selektiv ein Bild einer einzelnen Linse auf den Bildaufnehmer 10 aufzuschalten, indem vor den anderen Linsen der Abbildungsoptik 11 die Flüssigkristallzellen geschlossen werden. Die Abbildungsoptik 11 kann beispielsweise so gestaltet werden, dass der gesamte Raum 19 vor dem Bildaufnehmer 10 segmentiert wird, wie es durch die Strahlen 16, 17, 18 angedeutet wird. Jedes einzelne Segment wird auf demselben Bildaufnehmer 10 abgebildet. Damit ist es nun möglich, den gesamten Raum mit nur einem Bildaufnehmer 10 mit einer großen Bildauflösung zu erfassen. Alternativ sind jedoch auch Optiken denkbar, bei denen nur einzelne ausgewählte Bereiche des Raumes 19 auf den Bildaufnehmer 10 abgebildet werden. Es ist auch möglich, durch eine geeignete Abbildungsoptik 11 einen Raumbereich in unterschiedlicher Vergrößerung auf dem Bildaufnehmer 10 abzubilden, so dass es möglich ist, durch ein selektives Freischalten einzelner Linsen einen bestimmten Raumbereich zu zoomen. Als Abbildungsoptik 11 sind wie oben dargestellt Linsensysteme, z.B. ein Mikrolinsen-Array, planare Fresnel-Linsen und holographische Linsen möglich. Holographische Linsen haben darüber hinaus den Vorteil, dass sie preiswert herstellbar sind. Ferner können holographische Linsen wie später dargestellt gleichzeitig als Spektralfilter hergestellt werden.

Figur 5 zeigt den Aufbau eines erfindungsgemäßen streulicht-Brandmelders mit mehreren Streupunkten 24, 25 mittels einer nichtmechanischen erfindungsgemäßen optischen Blende 22. Die optische Blende 22 weist hier zwei Flüssigkristallzellen als schaltbare optische Elemente auf. Damit werden dann die Streupunkte 24, 25 jeweils für einen Bildaufnehmer 20 freigeschaltet. Hinter der optischen Blende 22 befindet sich ein Abbildungssystem 21 mit Linsen, die das die optische Blende 22 passierende Licht auf den Bildaufnehmer 20 fokussieren. Zwischen der optischen Blende 22 und den Linsen 21 befindet sich ein Spektralfilter 21a, das nur für den Spektralbereich des von der Lichtquelle emittierten Lichtes durchlässig ist. Mit einer Lichtquelle 23 wird das Licht in die Streupunkte 24, 25 gebracht, so dass nur Licht in den Bildaufnehmer 20 gestreut wird, wenn sich hier Objekte befinden, die zu einer Lichtstreuung führen. Solche Objekte sind z.B. Rauch oder andere Partikel, an denen sich das Licht streut. In dieser Weise wird ein Freiraum-Streulicht-Rauchmelder realisiert. Eine solche Anordnung ist grundsätzlich auch mit einer lichttechnisch geschlossenen Meßkammer (Labyrinth) denkbar und kann so helfen, Störgrößen durch Insekten oder Staubpartikel zu unterdrücken.

Figur 6 zeigt schematisch wie die optische Blende im Zusammenspiel mit einer Abbildungsoptik 27 und einem einzigen Bildaufnehmer 26 als Bewegungsmelder funktioniert, wobei Figur 6 kein Ausführungsbeispiel der Erfindung darstellt. Die optische Blende 28 weist drei Flüssigkristallzellen auf, mit denen ein Raum segmentierbar wird. Eine Person 29 nähert sich dem segmentierten Raum und wird durch ein sequentielles Schalten der Flüssigkristallzellen der optischen Blende 28 dann in den einzelnen Bereichen, die durch die optische Blende 28 freigeschaltet werden, erkannt. Das Abbildungssystem 27 fokussiert dann die Infrarotstrahlung, die von der Person 29 ausgeht und durch die optische Blende 28 transparent hindurchgeht, auf den Bildaufnehmer 26, der daher hier ein Infrarotdetektor sein wird. Als Infrarotdetektor ist ein Bolometer, ein Thermopile, ein pyroelektrischer Sensor oder ein pyroelektrischer Detektor-Array möglich.

Figur 7 zeigt eine Kombination eines Infrarotdetektors 30 mit einem Videosensor 31, um somit einen Einbruchs- und V2 Brandmelder in einem Melder zu kombinieren, wobei Figur 6 kein Ausführungsbeispiel der Erfindung darstellt. Eine optische Ausführungsbeispiel der Blende 33 mit zwei Flüssigkristallzellen segmentiert einen Raum 34, der überwacht werden soll. Auf die optische Blende 33 folgt eine Abbildungsoptik 32 mit zwei Linsen, die die durch die optische Blende gehende Strahlung auf die Infrarotsensoren 30 und den Videosensor 31 fokussiert. Für die Abbildungsoptik 32 können holographische Linsen verwendet werden, wobei jede einzelne holographische Linse so gestaltet sein kann, dass der sichtbare Spektralanteil des Lichts auf dem Videosensor 31 und der Infrarotanteil auf dem Passiv-Infrarotsensor 30 abgebildet wird. Dies hat den Vorteil, dass für jeden Raumbereich, der gleichzeitig auf mehreren Sensoren abgebildet werden soll, nur eine Linse benötigt wird.

## Patentansprüche

1. Streulicht-Rauchmelder, der dazu ausgebildet ist, Streulicht aus verschiedenen Richtungen zu detektieren, mit einer Lichtquelle (23), von der Licht in einen bestimmten Raumbereich abgestrahlt werden kann, das bei Rauch in dem Raumbereich gestreut wird,
mit einer optischen Blende (12, 22) und mit einem Lichtempfänger als Meßaufnehmer (7, 10, 20),
wobei die optische Blende (12, 22) vor dem Lichtempfänger (7, 10, 20) angeordnet ist,
**dadurch gekennzeichnet, dass** die optische Blende (12, 22) als optisches Schaltelement vor dem Lichtempfänger ausgebildet ist,
wobei die optische Blende (12, 22) ein in seinen optischen Eigenschaften veränderliches Material (4) zur Erzeugung der optischen Blendenwirkung aufweist,
wobei die optische Blende (12, 22) eine Mehrzahl an Anordnungen mit einem Analysator (6), dem Material (4) und einem Polarisator (2) aufweist,
wobei die Mehrzahl an Anordnungen durch ein an das Material (4) angelegtes elektrisches Feld eine optische Blendenwirkung erzielt,
wobei jede Anordnung der optischen Blende einen separaten optischen Schalter darstellt,
wobei an unterschiedliche Anordnungen voneinander unabhängige elektrische Felder anlegbar sind,
wobei sich vor dem Lichtempfänger ein Feld von Abbildungsoptiken (21, 21 a) befindet, das das Streulicht auf diesen abbildet, wobei das Streulicht von verschiedenen Raumbereichen entlang eines von der Lichtquelle (23) ausgehenden Lichtstrahles gestreut wird,
wobei der Streulicht-Rauchmelder dazu ausgebildet ist, das von den einzelnen Raumbereichen gestreute Licht durch ein sequentielles Freischalten der einzelnen Abbildungsoptiken (21, 21a) mit nur dem einen Lichtempfänger zu messen.

2. Streulicht-Rauchmelder nach Anspruch 1, **dadurch gekennzeichnet, dass** das Material (4) als ein Flüssigkristall ausgebildet ist.

3. Streulicht-Rauchmelder nach Anspruch 1 oder 2, **dadurch gekennzeichnet, dass** der Flüssigkristall als Twisted-NematicFlüssigkristall oder als Super-Twisted-NematicFlüssigkristall oder als Double-Super-Twisted-NematicFlüssigkristall oder als Film-Super-Twisted-NematicFlüssigkristall ausgebildet ist.

4. Streulicht-Rauchmelder nach einem der vorhergehenden Ansprüche, **dadurch gekennzeichnet, dass** wenigstens zwei der Anordnungen konzentrisch angeordnet sind.

5. Streulicht-Rauchmelder nach einem der vorhergehenden Ansprüche, **dadurch gekennzeichnet, dass** die Mehrzahl der Anordnungen in einer Matrix angeordnet sind.

6. Streulicht-Rauchmelder nach einem der vorhergehenden Ansprüche, **dadurch gekennzeichnet, dass** die Abbildungsoptik eine Anordnung von Linsen mit unterschiedlichen Vergrösserungen aufweist.

7. Streulicht-Rauchmelder nach einem der vorhergehenden Ansprüche, **dadurch gekennzeichnet, dass** die Abbildungsoptik als Linsensystem oder als planare Fresnel-Linsen oder als holographische Linsen ausgebildet ist.

## Claims

1. Stray light smoke alarm designed to detect stray light from different directions, comprising a light source (23), from which light can be emitted into a specific spatial region, which light is scattered in the case of smoke in the spatial region,
comprising an optical diaphragm (12, 22) and comprising a light receiver as measurement pick-up (7, 10, 20), wherein the optical diaphragm (12, 22) is arranged upstream of the light receiver (7, 10, 20), **characterized in that** the optical diaphragm (12, 22) is embodied as an optical switching element upstream of the light receiver,
wherein the optical diaphragm (12, 22) comprises a material (4) that is variable in terms of its optical properties for producing the optical diaphragm effect, wherein the optical diaphragm (12, 22) has a plurality of arrangements comprising an analyzer (6), the material (4) and a polarizer (2),
wherein the plurality of arrangements achieves an optical diaphragm effect by means of an electric field applied to the material (4),
wherein each arrangement of the optical diaphragm constitutes a separate optical switch,
wherein mutually independent electric fields can be applied to different arrangements,
wherein an array of imaging optical units (21, 21a) is situated upstream of the light receiver and images the stray light onto the latter, wherein the stray light is scattered by different spatial regions along a light beam emerging from the light source (23),
wherein the stray light smoke alarm is designed to measure the light scattered by the individual spatial regions by means of sequential activation of the individual imaging optical units (21, 21a) with only the one light receiver.

2. Stray light smoke alarm according to Claim 1, **characterized in that** the material (4) is embodied as a liquid crystal.

3. Stray light smoke alarm according to Claim 1 or 2, **characterized in that** the liquid crystal is embodied as a twisted nematic liquid crystal or as a super twisted nematic liquid crystal or as a double super twisted nematic liquid crystal or as a film super twisted nematic liquid crystal.

4. Stray light smoke alarm according to any of the preceding claims, **characterized in that** at least two of the arrangements are arranged concentrically.

5. Stray light smoke alarm according to any of the preceding claims, **characterized in that** the plurality of arrangements are arranged in a matrix.

6. Stray light smoke alarm according to any of the preceding claims, **characterized in that** the imaging optical unit has an arrangement of lenses having different magnifications.

7. Stray light smoke alarm according to any of the preceding claims, **characterized in that** the imaging optical unit is embodied as a lens system or as planar Fresnel lenses or as holographic lenses.

## Revendications

1. Détecteur de fumée à lumière diffusée, configuré pour détecter de la lumière diffusée provenant de différentes directions et présentant
une source de lumière (23) qui peut émettre dans une zone spatiale définie de la lumière diffusée lorsque de la fumée est présente dans la zone spatiale,
un écran optique (12, 22) et un récepteur de lumière qui sert d'enregistreur de mesure (7, 10, 20),
l'écran optique (12, 22) étant disposé en amont du récepteur de lumière (7, 10, 20),
**caractérisé en ce que**
l'écran optique (12, 22) est configuré comme élément optique de commutation prévu en amont du récepteur de lumière,
**en ce que** l'écran optique (12, 22) présente un matériau (4) dont les propriétés optiques peuvent se modifier en vue de former l'effet d'écran optique,
**en ce que** l'écran optique (12, 22) présente plusieurs systèmes dotés d'un analyseur (6), du matériau (4) et d'un polariseur (2),
**en ce que** les différents systèmes permettent d'obtenir un effet d'écran optique par l'application d'un champ électrique sur le matériau (4),
**en ce que** chaque système de l'écran optique constitue un commutateur optique séparé,
**en ce que** des champs électriques indépendants les uns des autres peuvent être appliqués sur les différents systèmes,
**en ce qu'**un champ d'optiques (21, 21a) de formation d'image, qui forme sur le récepteur de lumière une image de la lumière diffusée, est situé en amont du récepteur de lumière, la lumière diffusée par différentes zones spatiales étant diffusée le long d'un faisceau lumineux émis par la source de lumière (23), et
**en ce que** le détecteur de fumée à lumière diffusée est configuré pour mesurer avec un seul des récepteurs de lumière la lumière diffusée par les différentes zones spatiales par débranchement successif des différentes optiques (21, 21a) de formation d'image.

2. Détecteur de fumée à lumière diffusée selon la revendication 1, **caractérisé en ce que** le matériau (4) est configuré comme cristal liquide.

3. Détecteur de fumée à lumière diffusée selon la revendication 1 ou 2, **caractérisé en ce que** le cristal liquide est configuré comme cristal liquide nématique torsadé, comme cristal liquide nématique super-torsadé, comme cristal liquide nématique doublement super-torsadé ou comme cristal liquide nématique super-torsadé en film.

4. Détecteur de fumée à lumière diffusée selon l'une des revendications précédentes, **caractérisé en ce qu'**au moins deux des systèmes sont disposés concentriquement.

5. Détecteur de fumée à lumière diffusée selon l'une des revendications précédentes, **caractérisé en ce que** les différents systèmes sont disposés dans une matrice.

6. Détecteur de fumée à lumière diffusée selon l'une des revendications précédentes, **caractérisé en ce que** l'optique de formation d'image présente un système de lentilles qui présente différents taux de grossissement.

7. Détecteur de fumée à lumière diffusée selon l'une des revendications précédentes, **caractérisé en ce que** l'optique de formation d'image est configurée comme système de lentilles, comme lentilles de Fresnel planes ou comme lentilles holographiques.
